Europäisches Patentamt

European Patent Office

Office européen des brevets

(19)

(11) Publication number: **0 454 855 A1**

(12) **EUROPEAN PATENT APPLICATION**
**published in accordance with Art.**
**158(3) EPC**

(21) Application number: 90916071.5

(22) Date of filing: 02.11.90

(86) International application number:
PCT/JP90/01432

(87) International publication number:
WO 91/07709 (30.05.91 91/12)

(51) Int. Cl.5: **G05B 19/403**

(30) Priority: 17.11.89 JP 2989/89

(43) Date of publication of application:
06.11.91 Bulletin 91/45

(84) Designated Contracting States:
**DE FR GB**

(71) Applicant: **FANUC LTD.**
**3580, Shibokusa Aza-Komanba, Oshino-mura**
**Minamitsuru-gun, Yamanashi 401-05(JP)**

(72) Inventor: **ENDO, Takahiko Fanuc Dai-3**
**Vira-karamatsu**
**3527-1, Shibokusa Oshinomura**
**Minamitsuru-gun Yamanashi 401-05(JP)**

(74) Representative: **Brunner, Michael John et al**
**GILL JENNINGS & EVERY 53-64 Chancery**
**Lane**
**London WC2A 1HN(GB)**

(54) **WORKING METHOD OF CNC.**

(57) A working method of CNC for working products from materials of different shapes using a numerical controller (CNC). When it is attempted to use a non-standard material of a size different from the reference on which the working program is based (S2), the shape and size of the material are input (S3) through the shape input screen, and a working program is formed from the input data and the shapes of parts of a product, thereby to work the product. Therefore, even when the reference material is not available, the product can be worked using another material without the need of preparing a new working program again.

Fig. 1

## TECHNICAL FIELD

The present invention relates to a machining method for use by a numerical control apparatus (CNC), and more specifically, to a method of machining a same product from a raw material having a configuration different from that of a raw material commonly used in the numerical control apparatus.

## BACKGROUND ART

A machining program can be created by an interactive type numerical control apparatus by inputting data through a program input screen in response to a request from the numerical control apparatus, and therefore, the machining program can be easily created without the need for special knowledge, and products machined by the thus created program.

Nevertheless, with a conventional machining program for the numerical control apparatus, a new program must be created when a raw material having a different configuration is to be used, even if the same product is to be made. Namely, when defects occur in the products made, because the amount of raw material available is usually sufficient only to make the necessary number of the products, surplus raw materials are not always available at the site at which the products are being machined, and accordingly the preceded number of the products must be made by machining other, different raw materials. This situation usually an emergency, but the creating of a new program to handle different raw materials is very time-consuming, and thus the productivity thereof low.

## DISCLOSURE OF THE INVENTION

Taking the above into consideration, an object of the present invention is to provide a machining method for use by a numerical control apparatus, by which a product is machined by creating a machining program in such a manner that the configuration dimensions of a raw material different from a standard raw material are input through a configuration input screen, with regard a raw material of program input screens.

To solve the above problem, according to the present invention, there is provided a machining method for use by a numerical control apparatus (CNC) for machining a product from a raw material having a configuration not commonly used in the CNC, which comprises the steps of using a raw material having a size different from that of a standard raw material for which a machining program is created, inputting the configuration dimensions of the raw material through a configuration input screen, creating a machining program based on the configuration dimensions of the raw material and the part configuration of the product, and machining the product.

The configuration input screen with regard to a raw material of the program input screens of the numerical control apparatus is displayed at a CRT, and the dimensions of the standard raw material having been input to the items of a raw material configuration, maximum outside diameter, minimum inside diameter, and length, etc. are changed to those of a new raw material to be used, as necessary.

Namely, now machining program is automatically created by the numerical control apparatus, based on the dimensions of the new raw material and the part configuration of the product.

## BRIEF DESCRIPTION OF THE DRAWINGS

Figure 1 is a flowchart of a method by which a product is machined from a nonstandard raw material according to the present invention;

Figure 2(a) is a diagram explaining the machining of a product from a standard raw material according to the present invention;

Figure 2(b) is a diagram explaining the machining of a product from a nonstandard raw material according to the present invention;

Figure 3 is a diagram showing a program input screen of a numerical control apparatus; and

Figure 4 is a schematic arrangement of the hardware of a numerical control apparatus embodying the present invention.

## BEST MODE OF CARRYING OUT THE INVENTION

An embodiment of the present invention will be described below with reference to drawings.

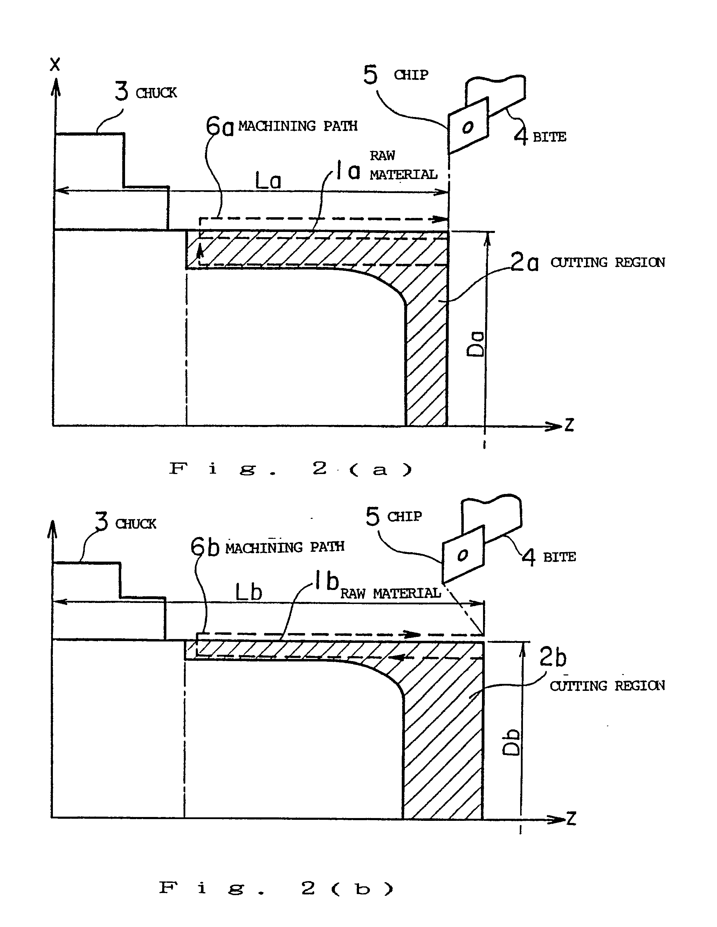

Figure 2(a) is a diagram showing the state in which a product is machined from a standard raw material by a lathe, wherein the standard raw material 1a is a bar having a maximum diameter Da and length La, the figure showing a cross section of the upper half of the standard raw material 1a. The standard raw material 1a is fixed to a spindle (not shown) by the chuck 3 of the lathe, and cutting region 2a shown by a hatched shape is cut by the chip 5 fixed at the extreme end of a bite 4, in accordance with a machining program of a numerical control apparatus, wherein a machining path is designated at 6a.

Figure 2(b) is a diagram showing the state in which a product is machined from a nonstandard raw material by a lathe, wherein the nonstandard raw material 1b is a bar having a maximum diameter Db and length Lb, the figure showing a cross section of the upper half of the nonstandard raw material 1b. The nonstandard raw material 1b is fixed to a spindle (not shown) by the chuck 3 of the lathe, and cutting region 2b shown by a hatched shape is cut by the chip 5 fixed at the extreme end of the bite 4, in accordance with a new machining program of the numerical control apparatus, wherein a machining path is designated at 6b.

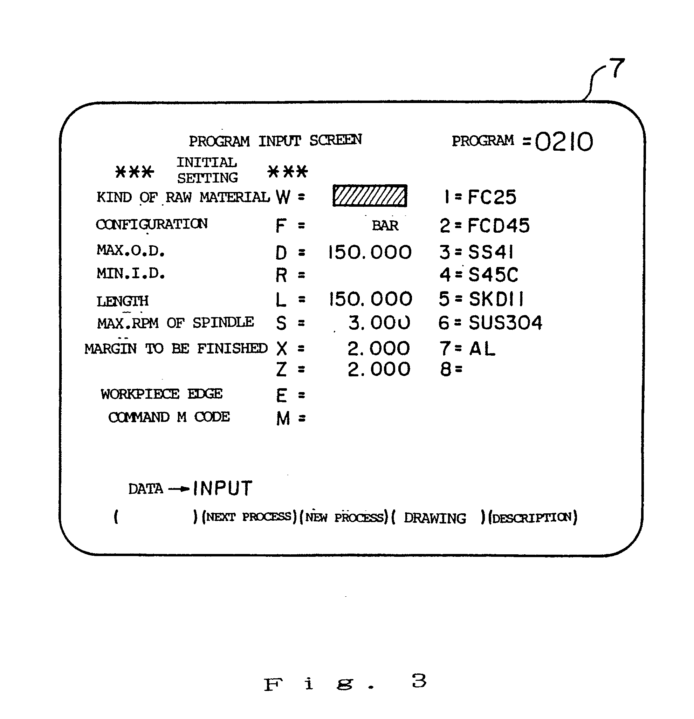

Figure 3 shows a configuration input screen with regard to a raw material of the program input screens. The program input screen 7 includes items to which the configuration dimensions of a raw material is to be input as data input items needed by a machining program. When a standard raw material is machined, standard numerical values are already input and a product is machined in accordance with a machining program created based on these numerical values. When products are to be machined, the number of the standard raw materials 1a must essentially coincide with the number of products, but the number of standard raw materials 1a is often too few, due to defective products, defective raw materials, or delays in the delivery of the raw materials. When the products are made using alternative raw materials, i.e., the raw materials 1b which are different from the standard raw materials (in this embodiment, the diameter and length thereof are different from those of the standard raw material), the numeral values of Db and Lb as the data for the above raw material 1b are input to the items of a maximum outside diameter and length in the configuration input screen 7, and replace the numerical values Da and La of the standard raw material 1a. The numerical control apparatus then creates a machining program based on these new numerical values, and the products are machined based on this new machining program.

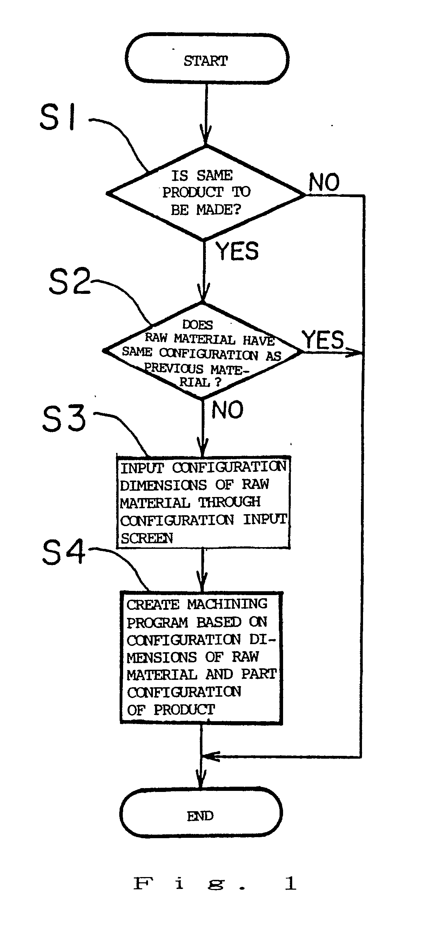

Figure 1 is a flowchart of a method for use by a numerical control apparatus, by which a product is machined from a nonstandard raw material, accordingly to the present invention, wherein numeral prefixed with an "S" indicate the number of steps of the process.

[S1] Whether or not the same product is to be continuously made is determined. If so, the flow goes to step S2.

[S2] Whether or not a raw material to be used is similar to that used at the previous machining is determined. If not, the flow goes to step S3.

[S3] The configuration dimensions of the new raw material are input through the configuration input screen with regard to a raw material.

[S4] A machining program is created based on the configuration dimensions of the new raw material and the part configuration of the product, to thereby enable the product to be machined.

Although the above description refers to a machining carried out by a lathe, a similar machining also can be carried out by a milling machine.

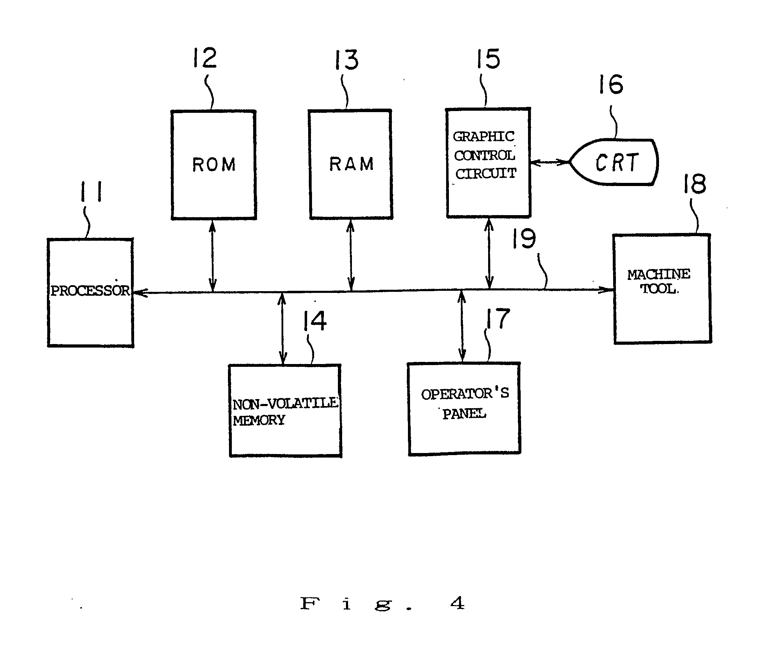

Figure 4 is a schematic arrangement of the hardware of the numerical control apparatus embodying the present invention, wherein processor 11 controls the numerical control apparatus as a whole, in accordance with a system program stored in a ROM 12. The ROM 12 is an EPROM or EEPROM, and the RAM 13 is a DRAM or the like in which various data or I/O signals are stored. A non-volatile memory 14 is composed of a CMOS which stores amounts of parameters, pitch error corrections, tool corrections and the like, and this data is maintained even after a power supply to the numerical control apparatus is cut off, because the CMOS is supplied with power from a battery and is a non-volatile memory.

A graphic control circuit 15 converts digital signals into signals for display, and supplies those signals to a display 16. A CRT or liquid crystal display is used as the display 16, to display the position of each axis, and the state of the I/O signals, parameters and the like. An operator's panel 17 composed of a keyboard or the like is used to interactively input various data or operate a machine tool 18. These components are interconnected through a bus 19.

Note that components such as an axes control circuit, servo amplifiers, spindle amplifiers, PMC (programmable machine controller) and the like are not shown in Figure 4. Further, a plurality of processors can be used to provide a multi-processor system, if required.

As described above, according to the present invention, since a machining program by which a cutting region is automatically changed based on the configuration of a new raw material and the part configuration of a product is created in such a manner that only the changed configuration dimensions of the raw material are input through the configuration input screen with regard to a raw material of the program input screens, and the original configuration dimensions are replaced thereby and the product is machined in accordance with the new machining program, a time needed to create a new program is greatly shortened, whereby the working efficiency can be greatly increased.

**Claims**

1. A machining method for use by a numerical control apparatus (CNC) for machining a product from a raw material having a configuration not commonly used in the CNC, comprising the steps of:

    using a raw material having a size different from that of a standard raw material for which a machining program is created;

inputting the configuration dimensions of said raw material through a configuration input screen;

creating a machining program based on said configuration dimensions and a part configuration of said product; and

machining said product.

2. A machining method for use by a numerical control apparatus according to claim 1, wherein said configuration dimensions include at least an outside diameter of said raw material.

**S1** IS SAME PRODUCT TO BE MADE? — NO

YES

**S2** DOES RAW MATERIAL HAVE SAME CONFIGURATION AS PREVIOUS MATE-RIAL ? — YES

NO

**S3** INPUT CONFIGURATION DIMENSIONS OF RAW MATERIAL THROUGH CONFIGURATION INPUT SCREEN

**S4** CREATE MACHINING PROGRAM BASED ON CONFIGURATION DI-MENSIONS OF RAW MATERIAL AND PART CONFIGURATION OF PRODUCT

START

END

F i g . 1

X

3 CHUCK

6a MACHINING PATH

5 CHIP

0

4 BITE

La

1a RAW MATERIAL

2a CUTTING REGION

Da

Z

F i g .  2 ( a )

3 CHUCK

6b MACHINING PATH

5 CHIP

0

4 BITE

Lb

1b RAW MATERIAL

2b CUTTING REGION

Db

Z

F i g .  2 ( b )

```
                PROGRAM INPUT SCREEN          PROGRAM = 0210
        ***   INITIAL    ***
              SETTING
        KIND OF RAW MATERIAL W =  ///////////   1 = FC25

        CONFIGURATION       F =        BAR     2 = FCD45

        MAX.O.D.            D =   150.000      3 = SS41
        MIN.I.D.            R =                4 = S45C

        LENGTH              L =   150.000      5 = SKD11
        MAX.RPM OF SPINDLE  S =      3.000     6 = SUS304
        MARGIN TO BE FINISHED X =    2.000     7 = AL
                            Z =      2.000     8 =

         WORKPIECE EDGE     E =
          COMMAND M CODE    M =


          DATA → INPUT

          (            ) (NEXT PROCESS)(NEW PROCESS)( DRAWING  )(DESCRIPTION)
```

Fig. 3

EP 0 454 855 A1

Fig. 4

8

# INTERNATIONAL SEARCH REPORT

International Application No  PCT/JP90/01432

## I. CLASSIFICATION OF SUBJECT MATTER (if several classification symbols apply, indicate all) [4]

According to International Patent Classification (IPC) or to both National Classification and IPC

Int. Cl$^5$  G05B19/403

## II. FIELDS SEARCHED

Minimum Documentation Searched [7]

| Classification System | Classification Symbols |
|---|---|
| IPC | G05B19/403 |

Documentation Searched other than Minimum Documentation
to the Extent that such Documents are Included in the Fields Searched [8]

| | |
|---|---|
| Jitsuyo Shinan Koho | 1932 – 1991 |
| Kokai Jitsuyo Shinan Koho | 1971 – 1991 |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| Y | JP, A, 57-206913 (Yamazaki Tekkosho K.K.), December 18, 1982 (18. 12. 82), (Family: none) | 1-2 |
| Y | JP, A, 60-49403 (Fanuc Ltd.), March 18, 1985 (18. 03. 85), & US, A, 4529290 | 1-2 |
| Y | JP, A, 63-116213 (Mitsubishi Electric Corp.), May 20, 1988 (20. 05. 88), (Family: none) | 1-2 |
| Y | JP, A, 62-70909 (Mitsubishi Electric Corp.), April 1, 1987 (01. 04. 87), (Family: none) | 1-2 |
| A | JP, A, 61-105609 (Citizen Watch Co., Ltd.), May 23, 1986 (23. 05. 86), (Family: none) | 1-2 |
| A | JP, A, 60-126710 (Fanuc Ltd.), July 6, 1985 (06. 07. 85), & US, A, 4723203 | 1-2 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| January 29, 1991 (29. 01. 91) | February 12, 1991 (12. 02. 91) |

| International Searching Authority | Signature of Authorized Officer |
|---|---|
| Japanese Patent Office | |

Form PCT/ISA/210 (second sheet) (January 1985)